# FASCICULE DE BREVET EUROPEEN

(11) **EP 2 408 719 B1**
(45) Date de publication et mention de la délivrance du brevet: **02.09.2015**
(21) Numéro de dépôt: 10709018.5
(22) Date de dépôt: 17.03.2010
(51) Int. Cl.: C02F 1/52, C02F 1/56, C02F 1/68, C02F 11/14, C08J 3/05

(54) **COMPOSITIONS POUR LE CONDITIONNEMENT DE BOUES**
ZUSAMMENSETZUNG ZUR KONDITIONIERUNG VON SCHLAMM
COMPOSITIONS FOR THE CONDITIONING OF MUD

(30) Priorité: 17.03.2009 BE 200900161
(43) Date de publication de la demande: 25.01.2012
(73) Titulaire: S.A. LHOIST RECHERCHE ET DEVELOPPEMENT, 1342 Ottignies-Louvain-La-Neuve (BE); SNF SAS, 42000 Saint-Etienne (FR)
(72) Inventeur: BIOTTEAU, Laurent, 42320 Saint Christo en Jarez (FR); BLANDIN, Gaétan, 49360 Maulevrier (FR); CHARBONNIER, Hubert, 49390 Vourles (FR); OZTURK, Tamer, B-7100 La Louvière (BE)
(74) Mandataire: Coulon, Ludivine
(86) Numéro de dépôt international: PCT/EP2010/053487
(87) Numéro de publication internationale: WO 2010/106118

(56) Documents cités:
- WO-A1-00/47527
- GB-A- 842 910
- GB-A- 1 159 819
- US-A- 4 010 135
- US-A- 4 675 114
- US-A- 4 711 727
- US-A- 5 128 046
- US-A- 6 042 732

## Description

La présente invention se rapporte à une composition de conditionnement de boues comprenant un composé minéral et un composé organique, ledit composé minéral étant de la chaux, et ledit composé organique étant choisi dans le groupe des polymères linéaires ou ramifiés à base de sels de diallyldialkyl ammonium.

On connait des compositions de traitement de boues notamment du document EP 0104 904 (US 4 711727) qui divulgue l'utilisation de différents composés minéraux, en association avec divers polymères organiques. Toutefois, selon l'enseignement de ce document, le polymère organique a une action dispersante permettant de produire des suspensions concentrées de composés minéraux ayant une viscosité acceptable en vue de pomper la composition susdite.

Le document US 4,675,114 divulgue en outre un procédé de traitement de boues par un ajout séquentiel d'un composé minéral et un composé organique parmi de multiples étapes successives.

Les villes, notamment les grandes métropoles, et les industries, produisent ou rejettent des volumes très importants d'eaux usées. Le traitement de ces eaux, avant leur rejet dans le milieu naturel, a pour résultat la formation de très grosses quantités de boues. Une étape de déshydratation mécanique est généralement nécessaire afin de réduire au maximum le volume occupé par les boues, quelles que soient leurs origines, et d'accroître leur siccité avant leur valorisation agricole ou par incinération ou par compostage ou encore avant leur élimination par stockage en décharge. Cette déshydratation, c'est-à-dire la séparation solide/liquide, est réalisée dans la plupart des cas au moyen d'un filtre à bandes, d'un filtre-presse ou d'un décanteur centrifuge qui combinent le plus souvent un conditionnement chimique appliqué en amont d'une action mécanique. Outre la réduction de volume, l'objet de ce traitement est de faciliter la manipulation, le transport et le stockage de ces boues.

La présente invention concerne particulièrement le conditionnement des boues à l'aide d'un composé minéral et organique. Par les termes « boues » au sens de l'invention, on entend un résidu présentant un taux de matière sèche d'au moins 0,5%, souvent supérieur ou égal à 1 %. Les boues peuvent être minérales ou organiques ou huileuses.

La notion de conditionnement, en particulier de conditionnement chimique, doit être comprise au sens de la présente invention comme défini par Degrémont dans « Mémento Technique de l'eau, Edition du Cinquantenaire 1989, 9ème édition » au chapitre 19, en particulier au pages 949 à 959.

Pour que la boue soit filtrable, il faut préalablement casser la cohésion colloïdale de la boue et augmenter artificiellement la taille des particules qui la constituent. C'est l'objet du conditionnement. Un conditionnement adéquat de la boue est la base du bon fonctionnement de l'atelier de déshydratation. Le conditionnement devra donc être optimisé pour être adapté à la fois à la nature des boues à traiter mais aussi au type d'outil de déshydratation.

Le conditionnement des boues est donc en réalité un traitement dans lequel les caractéristiques des boues sont modifiées pour faciliter la séparation de la phase solide et de la phase liquide.

Contrairement à un procédé de traitement de l'eau (voir par exemple le document US 4,711,727) dont le principe consiste à provoquer, par l'ajout de floculant et/ou coagulant, l'agglomération et la décantation des particules colloïdales, le conditionnement des boues vise à préparer ces dernières pour permettre le bon fonctionnement des appareils de déshydratation mécanique en éliminant notamment les problèmes de fluage, de colmatage des toiles et de collage des gâteaux. Le conditionnement des boues consiste donc en une application particulière de la coagulation-floculation. Il a pour but d'augmenter sa siccité (teneur en matière sèche) en accélérant la séparation solide/liquide.

D'ailleurs, le document US 4,711,727 divulgue l'utilisation conjointe de suspensions minérales pouvant contenir de la chaux et, de manière indifférente, de floculant et/ou coagulant, pour floculer des eaux usées, chargées à hauteur d'environ 300 mg/l (0,03%) de matière en suspension et enseigne notamment d'effectuer des dilutions préalables des suspensions minérales précitées.

Trois technologies sont le plus fréquemment utilisées comme systèmes de déshydratation mécanique dans les installations de conditionnement de boues.

### Les filtres à bandes presseuses

Sur ce type de filtre, la boue conditionnée est d'abord égouttée puis compressée entre deux toiles filtrantes. Le système d'avancement et de compression des toiles est assuré par des rouleaux. Ce type d'outil nécessite un floc consistant et bien dissocié, favorisant une libération d'eau rapide lors de l'étape d'égouttage.

### Les décanteurs centrifuges ou centrifugeuses

Ces systèmes utilisent la force centrifuge pour engendrer une décantation accélérée. Une bonne séparation supposera de former un floc volumineux et lourd, résistant au cisaillement.

### Les filtres-presses (ou filtres à plateaux)

Contrairement aux systèmes précédents, cet outil fonctionne de façon discontinue, par batch. Un filtre-presse est constitué de plateaux recouverts de toiles filtrantes, disposés en batterie, chambrés et/ou à membrane. Les chambres aménagées entre chaque plateau sont alimentées avec de la boue conditionnée par l'intermédiaire d'une pompe. Cette pompe à boue alimente les chambres (opération de gavage) jusqu'à l'obtention d'une pression élevée, généralement comprise entre 10 et 15 bars. En fin de cycle, les plateaux sont séparés afin d'évacuer les gâteaux formés (" débâtissage "). Il est très souhaitable que les gâteaux ainsi formés restent relativement fermes et surtout se décollent bien des plaques et toiles ; dans le cas contraire, une intervention manuelle et des nettoyages et lavages sont nécessaires. Dans le cas du filtre-presse, on recherchera un conditionnement robuste aux contraintes (notamment de pression).

Parmi les différents conditionnements chimiques visant à préparer la boue, on distingue notamment le conditionnement organique et le conditionnement minéral.

Le conditionnement dit organique : utilisation de polymère organique comme seul floculant (dosage-type 2 à 20 kg par tonne de matières sèches). Seuls les polyélectrolytes de synthèse à longues chaînes (masses moléculaires élevées, notamment à base d'acrylamide) sont efficaces ; ils forment des flocs volumineux et bien différenciés dans une eau interstitielle clarifiée. Ce conditionnement est surtout utilisé lors de la déshydratation sur centrifugeuse et filtre à bandes presseuses. Il est peu utilisé lors d'une déshydratation mécanique par filtration sous pression (filtre-presse mécanisé) car il conduit à un temps de pressée plus long, en raison de la résistance spécifique élevée, à des lavages fréquents des toiles et à un moins bon décollement du gâteau.

Le conditionnement dit minéral : utilisation conjointe d'un sel de fer ou d'aluminium, comme le chlorure ferrique (dosage-type : 3 à 10 % en poids par rapport à la matière sèche traitée) et de la chaux (dosage-type : 10 à 40 % en poids par rapport à la matière sèche traitée). Ce mode de conditionnement produit un floc fin mais très robuste aux contraintes ; il sera donc tout particulièrement adapté à la filtration sur filtre presse. Néanmoins l'utilisation de sels de fer n'est pas sans poser de problème d'exploitation tels que : corrosion des canalisations et des filtres en acier ou fonte, présence de chlorures en forte proportion, présence de fer qui, lors de l'incinération des boues, est à l'origine de la production de mâchefer, risque de brûlures pour le personnel.

Il existe également des conditionnements mixtes (minéral et organique) afin d'optimiser les performances de déshydratation.

Comme on le voit, toutes les méthodes de conditionnement ci-dessus présentent des inconvénients. Le conditionnement organique n'est pas le mieux adapté à certains systèmes de déshydratation comme les filtres-presses ; les autres conditionnements évoqués font notamment appel aux sels de fer qui posent les nombreux problèmes précités.

Une autre possibilité encore de conditionnement mixte est divulguée dans le document EP 1 154 958. Le procédé divulgué enseigne une addition de chaux à des boues industrielles, choisie pour éviter que le pH de la boue à laquelle la chaux a été ajoutée ne s'élève trop rapidement. Le procédé prévoit également l'addition de composants organiques floculants à longue chaîne (anionique, cationique ou non ionique, de manière indifférente) pour faciliter la floculation de la boue ainsi traitée. Puisque le pH de la boue augmente de façon contrôlée, le composant organique floculant peut exercer son activité floculante sans être dégradé par une augmentation trop rapide de pH.

Dans le document WO2008/058973, un procédé de traitement de boues par de la chaux est décrit, selon lequel un floculant organique *anionique* est ajouté à la boue, puisque les polymères *cationiques* se dégradent en général rapidement à partir d'un pH valant 9 ou 10. Puisque le floculant anionique présente un optimum d'activité à des pH au-delà de 10 à 12, il est donc préférable d'effectuer une montée de pH rapide ce que permet parfaitement l'addition de chaux à la boue.

Quels que soient le mode de conditionnement et les réactifs mis en jeu, un bon conditionnement des boues suppose la maitrise des mécanismes de coagulation/floculation, l'objectif étant de permettre la bonne dispersion des réactifs dans la boue sans déstructurer la boue floculée. Un soin tout particulier doit donc être apporté à l'intégration des réactifs (mode et ordre d'intégration), aux temps de contact et de maturation ainsi qu'aux contraintes appliquées sur la boue floculée.

L'obtention de bons résultats nécessite fréquemment, entre autres :
- la préparation des réactifs (mise en solution du/des polymère(s), fabrication de lait de chaux) pour favoriser leur dispersion et accroître leur efficacité à conditionner la boue ;
- des bassins de conditionnements successifs
- et/ou des mélangeurs en ligne.

Peuvent également être critiques l'ordre d'injection des réactifs (le chlorure ferrique doit être ajouté avant la chaux et le polymère souvent en dernier lieu) et certaines interactions entre réactifs (risque de floculation de la chaux par le polymère).

Dès lors, comme on peut le constater, les réactifs de conditionnement de boues existants présentent tous des contraintes laborieuses comme de tenir compte de l'ordre d'addition des réactifs, de l'instabilité des composants si ajoutés ensembles, nécessitant un isolement (stockage, amenée séparée) et/ou des précautions d'addition ou encore la sélection de chaux spécifique, comme par exemple pour conférer à la boue les propriétés optimales pour que le polymère puisse avoir son action floculante.

La présente invention vise à pallier les inconvénients précités de l'art antérieur lors du conditionnement des boues avant déshydratation, en offrant une solution simple, sûre et efficace aux problèmes rencontrés précédemment. Simple par une réduction des opérations (réduction des coûts d'entreposage des composés, réduction des coûts de mise en oeuvre); sûre par l'absence ou la limitation du recours aux sels de fer et efficace, notamment par l'obtention de flocs résistants, compatibles avec l'usage de filtres-presses permettant donc un rendement de filtration élevé (augmentation de la siccité (teneur en matière sèche) du gâteau obtenu, accélération de l'étape de séparation mécanique solide/liquide et réduction des problèmes de fluage, de colmatage des toiles et de collage des gâteaux).

Selon l'invention, il a été trouvé de manière surprenante qu'une composition caractérisée en ce que ledit composé organique choisi dans le groupe des polymères linéaires ou ramifiés à base de sels de diallyldialkyl ammonium est un coagulant organique, cationique, présentant un poids moléculaire moyen pondéral inférieur ou égal à 5 millions g/mol et supérieur ou égal à 20.000 g/mol, présent en une quantité allant de 3 g à 100 g pour 1 kg de chaux (exprimés en équivalent de chaux éteinte Ca(OH)₂), la composition étant sous la forme d'un mélange homogène et stable de chaux et dudit coagulant avant d'être introduite pour le conditionnement des boues, et en ce que ladite composition est
a) sous forme solide, dans laquelle ladite chaux est de la chaux éteinte et/ou de la chaux vive, toutes deux sous forme pulvérulente, et ledit coagulant organique cationique est également sous forme solide, ou
b) sous forme d'une suspension stable, dans laquelle ladite chaux est de la chaux éteinte sous forme de lait de chaux, et forme avec ledit coagulant organique ladite suspension.
, permet d'effectuer un conditionnement des boues optimum avant que celles-ci ne subissent une opération de déshydratation mécanique. Ce conditionnement se caractérise par une simplification de la mise en oeuvre, tout en permettant une amélioration des performances de filtration.

En effet, selon la présente invention, il a été trouvé de manière surprenante que l'association d'un composé minéral particulier avec un polymère organique particulier dans une composition permet une utilisation pour le traitement des boues, et plus particulièrement pour le conditionnement des boues, notamment urbaines et industrielles, avant que celles-ci ne subissent une opération de déshydratation mécanique, c'est-à-dire une composition qui est d'une part stable et homogène pour faciliter son entreposage et son utilisation et qui permet d'autre part de réduire les coûts de mise en oeuvre, tout en obtenant un rendement de filtration élevé. La composition selon l'invention permet donc notamment d'augmenter la siccité (teneur en matière sèche) du gâteau obtenu lors de rétape de séparation mécanique solide/liquide.

Au sens de l'invention, un *coagulant* est un composé qui permet de déstabiliser les constituants présents dans une eau ou boue donnée et dès lors la formation de *microflocs,* au contraire d'un *floculant* qui permet d'agglomérer en *agrégats* les particules formées pendant la déstabilisation.

Lors de la coagulation par un coagulant cationique, c'est-à-dire chargé positivement, il va se produire un phénomène d'équilibrage des charges des particules dans la boue (chargée négativement). En effet, d'une manière générale, les particules dans la boue portant une charge négative vont voir leurs charges être contrebalancées par les charges positives des coagulants cationiques. Les coagulants cationiques vont interagir avec plusieurs particules de la boue et former ainsi des microflocs.

La présente invention a donc pour objet des compositions comprenant à la fois de la chaux et au moins un polymère, encore appelé coagulant, organique cationique à base de sels de diallyldialkyl ammonium pour le conditionnement des boues avant leur déshydratation.

Les compositions selon l'invention sont préalablement fabriquées et livrées sous la forme d'un mélange homogène et stable dudit au moins un coagulant et de chaux, avant d'être introduits simultanément pour le conditionnement des boues.

Une telle fabrication industrielle préalable des compositions selon l'invention est rendue possible grâce à la bonne stabilité dans le temps du mélange, sous forme de poudre ou liquide ; les compositions peuvent dès lors être stockées durant plusieurs semaines avant leur utilisation, sans risque d'altération de leur efficacité pour le conditionnement des boues, comme il apparait dans les exemples 3, 4 et 6 ci-dessous.

Comme signalé plus haut, l'ajout de chaux engendre un pH élevé qui provoque, dans la plupart des cas, l'inactivation ou la destruction par hydrolyse alcaline des polymères organiques lors d'une utilisation mixte. De plus, la présence conjointe de chaux et de polymère organique peut conduire à une consommation de ce dernier pour floculer la chaux, ce qui est inutile et rend le polymère indisponible (voir exemple 1). L'homme du métier n'est donc pas incité à utiliser ce type de polymère conjointement à la chaux, en particulier sous la forme d'une réelle composition (mélange), pour pallier les déficiences de l'art antérieur pour le conditionnement des boues.

En outre, rien ne laisse penser qu'une simple association comprenant à la fois de la chaux et au moins un coagulant organique pour le conditionnement des boues puisse être suffisante, à la sortie de l'étape de déshydratation mécanique, pour obtenir des flocs résistants et un degré de siccité supérieur à celui réalisé par la mise en oeuvre des procédés classiques et de permettre des économies énergétiques et/ou en agents de conditionnement (coagulant, chaux), comme le montre l'exemple 5.

Avantageusement, ledit coagulant organique cationique présente une charge cationique supérieure ou égale à 4, de préférence supérieure ou égale à 4,5 et en particulier supérieure ou égale à 5 meq/g, la charge cationique étant avantageusement inférieure ou égale à 10, de préférence inférieure ou égale à 9 meq/g, en particulier inférieure ou égale à 7,5 meq/g

Avantageusement, ledit polymère à base de sels de diallyldialkyl ammonium est un polymère à base de composés de formule générale :

(CH2=CH-CH2)₂N⁺R₁R₂, X⁻

Dans laquelle
X⁻ représente un halogénure ou un autre contre-ion de charge négative,
R₁ et R₂ représentent indépendamment l'un de l'autre un atome d'hydrogène ou une chaîne alkyle en C₁ à C₁₀

Dans une forme de réalisation avantageuse, ledit polymère est un polymère à base de chlorure de diallyl diméthyl ammonium, encore appelé DADMAC.

Ledit polymère linéaire ou ramifié à base de sels de diallyldialkyl ammonium peut être un copolymère et comprendre un ou plusieurs autres monomères choisi dans le groupe constitué des monomères non ioniques, tel que l'acrylamide, le méthacrylamide, la N-vinyl pyrrolidone, le vinylacétate, l'alcool vinylique, les esters acrylate, l'alcool allylique, le N-vinyl acétamide ou la N-vinylformamide, et des monomères cationiques tels que le dialkylaminoalkyl (méth)acrylate, le dialkylaminoalkyl (méth)acrylamide, leurs sels d'ammonium quaternaire ou leurs sels d'acides comme par exemple l'acrylate de diméthylaminoéthyle (ADAME), du méthacrylate de diméthylaminoéthyle (MADAME), quatemisés ou salifiés, du chlorure d'acrylamidopropyltriméthylammonium (APTAC) et du chlorure de méthacrylamidopropyltriméthylammonium (MAPTAC).

Dans une variante selon l'invention, ledit coagulant organique cationique comporte, en association aux charges cationiques, des charges anioniques portées par des monomères anioniques, tels que, par exemple, l'acide (méth)acrylique, l'acide acrytamidométhylpropane sulfonique, l'acide itaconique, l'anhydride maléique, l'acide maléique, l'acide vinyl-sulfonique, l'acide méthallyl sulfonique et leurs sels. De cette façon, ledit coagulant organique peut-être de nature très légèrement amphotère.

Ce polymère ne nécessite pas le développement de procédé de polymérisation particulier. Il peut être obtenu par toutes les techniques de polymérisation bien connues par l'homme de métier : polymérisation en gel, polymérisation par précipitation, polymérisation en émulsion (aqueuse ou inverse) suivie ou non d'une étape distillation, polymérisation en suspension, polymérisation en solution, ces polymérisations étant suivies ou non d'une étape permettant d'isoler une forme sèche du (co)polymère par tous types de moyens bien connus de l'homme de métier.

De manière avantageuse, dans la composition selon l'invention, ledit coagulant organique cationique est présent en une quantité allant de 5 à 80 g (exprimée en matière active, à savoir en polymère) et plus préférentiellement de 10 à 65 g pour 1 kg de chaux (exprimés en équivalent de chaux éteinte Ca(OH)₂).

La taille des particules de chaux n'est pas critique. Elles seront en général de taille majoritairement (plus de 90%) supérieure à 0,5 µm et majoritairement inférieure à 2 mm, voire 1 mm, de préférence inférieure à 500 µm.

On entend par chaux vive, une matière solide minérale dont la composition chimique est principalement de l'oxyde de calcium CaO. La chaux vive est communément obtenue par cuisson de calcaire, principalement constitué de CaCO₃, dont il peut subsister quelques pour cents dans la chaux. La chaux vive peut également contenir des impuretés telles que de l'oxyde de magnésium MgO, de la silice SiO₂, des silicates ou encore de l'alumine Al₂O_{3,} voire un agent retardateur d'hydratation, à hauteur de quelques pourcents. Il est entendu que les impuretés sont exprimées sous les formes précitées mais peuvent en réalité apparaître sous des phases différentes.

On entend par chaux éteinte ou chaux hydratée, un ensemble de particules solides, principalement sous forme d'hydroxyde de calcium Ca(OH)₂, obtenu par "extinction", parfois appelée "hydratation", de chaux vive avec de l'eau. Cette chaux éteinte peut évidemment contenir les impuretés précitées, issues de la chaux vive.

La chaux éteinte peut se présenter sous forme pulvérulente ou sous forme de suspension.

On entend par lait de chaux, une suspension aqueuse, fabriquée au départ de chaux vive ou de chaux hydratée. Les formes de réalisation liquide de la composition selon l'invention sont réalisées au départ de laits de chaux.

Comme mentionné précédemment, le coagulant organique cationique utilisé peut également être ramifié voir réticulé de préférence durant (et/ou éventuellement après) la polymérisation, en présence d'un agent ramifiant et éventuellement d'un agent de transfert.

D'autres formes de réalisation de la composition suivant l'invention sont indiquées dans les revendications annexées.

L'invention a aussi pour objet une utilisation de la composition susdite pour le conditionnement de boues

De plus, l'invention se rapporte à une utilisation de la composition susdite pour le préchaulage des boues.

On entend par préchaulage l'ajout de composé calcique à une boue avant déshydratation.

D'autres formes de réalisation de l'utilisation suivant l'invention sont indiquées dans les revendications annexées.

L'invention se rapporte également à un procédé de déshydratation de boues, comprenant
- une addition d'une composition telle que décrite précédemment, à des boues, notamment urbaines ou industrielles à traiter, avant déshydratation de cette dernière,
- un conditionnement de ladite boue à laquelle ladite composition a été ajoutée,
- une séparation solide/liquide de la boue conditionnée et
- une collecte du solide issu de ladite séparation.

Particulièrement, selon l'invention, ladite filtration est réalisée au moyen d'un filtre à bandes, d'un filtre-presse ou d'un décanteur centrifuge, de préférence un filtre-presse.

Généralement, la siccité du solide issu de la déshydratation est comprise dans la plage allant de 10% à 80%, notamment de 10% à 50%, en particulier entre 20% et 50% en poids.

En général, la composition selon l'invention sera ajoutée à la boue avec un dosage qui correspond à des taux de chaulage (exprimé en Ca(OH)₂) de 5% à 100%, en particulier de 10% à 80%, notamment de 15% à 60% par rapport à la matière sèche de la boue.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux exemples.

Les coagulants organiques cationiques selon l'invention utilisés sont de poids moléculaire moyen pondéral inférieur à 5 millions g/mol et supérieur ou égal à 20 000 g/mol, de préférence de poids moléculaire moyen pondéral inférieur à 3 millions g/mol et supérieur ou égal à 50 000 g/mol.

De préférence, les coagulants organiques au sens de l'invention présentent une charge cationique supérieure ou égale à 4 meq/g, notamment à 4,5 meq/g, avantageusement supérieure ou égale à 5 meq/g et inférieure ou égale à 10, de préférence inférieure ou égale à 9 meq/g, en particulier inférieure ou égale à 7,5 meq/g

Ces caractéristiques des « coagulants » les distinguent des polymères organiques cationiques, souvent qualifiés de « floculants » et qui possèdent des poids moléculaires moyen pondéraux souvent largement supérieurs à 5 millions g/mol et qui sont dits à longue chaîne. Leur chaîne dite longue leur permet de ponter d'autres molécules, ce qui leur confère leur caractère floculant.

De même, ces caractéristiques des « coagulants » les distinguent des polymères organiques dispersants qui présentent généralement une charge anionique (en tout cas lors d'une utilisation en association avec de la chaux) et qui ont pour but de permettre la dispersion d'une substance ou d'une particule au sein d'un liquide dans lequel elle n'est pas soluble. La nature dispersante est principalement due à la répulsion entre charges portées par le dispersant (négative) et les particules de la boue (également négative) qui empêche toute agglomération et maintient la dispersion entre particules.

De par leur nature, les coagulants permettent une déstabilisation des particules (colloïdes) en suspension en neutralisant leur charge (annulation du potentiel ZETA) en comparaison des floculants qui forment de réels ponts entre particules pour réaliser des flocs, à savoir des agglomérats de particules déstabilisées.

### EXEMPLE 1

### Formulation de composition poly-DADMAC/chaux selon l'invention vis-à-vis d'autres associations de polymères et de chaux

Trois familles de polymères sont comparées. Dans chaque famille le polymère le plus performant à mettre en oeuvre est déterminé. Des formulations sont préparées par intégration sous agitation des polymères testés, à des suspensions de chaux formulées à 300 g/dm³. Pour chaque formulation des dosages de 5% ont été réalisés, dosages exprimés en pourcentage de matière active de polymère par rapport à l'équivalent sous forme d'oxyde CaO contenu dans la suspension de chaux.

**Tableau 1**

| Type de polymère | Nom commercial (forme) | Nature | Poids moléculaire (g/mole) | Cationicité (meq/g) | Dosage (% en poids MA/CaO) |
|---|---|---|---|---|---|
| Floculant cationique | EM 840MBL (émulsion) | copolymère acrylamide ADAME chlorométhylé | 8 millions | 4,73 | 5% |
| Floculant anionique | EM 630 (émulsion) | copolymère acrylamide acrylate de sodium | 20 millions | NA | 5% |
| Coagulant cationique selon l'invention | FL4820 (émulsion) | homopolymère de DADMAC | 1 million | 6,2 | 5% |

Pour chaque essai réalisé, l'aspect de la formulation a été noté. Les résultats sont présentés au tableau 2 ci-dessous.

**Tableau 2**

| N° essai | 1 | 2 | 3 |
|---|---|---|---|
| Polymère organique | EM 840 MBL | EN 630 | FL4820 |
| Type | Floculant cationique | Floculant anionique | Coagulant cationique |
| Aspect de la suspension | Prise en masse / non utilisable | Prise en masse / non utilisable | Peu de modification de l'aspect de la suspension |

Comme on peut le constater, la composition coagulant cationique type poly-DADMAC/lait de chaux selon l'invention est la seule combinaison polymère/lait de chaux qui permette d'obtenir une suspension (pas de prise en masse).

### EXEMPLE 2

### Intérêt d'une composition selon l'invention comprenant de la chaux et du poly-DADMAC/chaux vis-à-vis d'autres associations de polymères et de chaux

Les essais sont réalisés sur une installation de filtration pilote. L'installation comprend une cuve de préparation agitée de 200 dm³, une pompe de transfert et chargement ainsi qu'un filtre-presse de type Netzsch composé de 11 plateaux pour une surface filtrante totale de 1 m².

La boue, issue de traitement biologique, a subi un traitement préalable de concentration sur table d'égouttage. La concentration en matière sèche de la boue est de 50 g/dm³.

Trois familles de polymères sont comparées. Dans chaque famille le polymère le plus performant et la dose préférentielle à mettre en oeuvre sont préalablement déterminés; la dose est exprimée en pourcentage en poids de matière active (MA) par rapport au poids de matière sèche de boue (MS) (voir tableau 3).

**Tableau 3**

| Type de polymère | Nom commercial (forme) | Nature | Poids moléculaire (g/mole) | Cationicité (meq/g) | Dosage (% en poids MA/MS) |
|---|---|---|---|---|---|
| Floculant cationique | EM 840MBL (émulsion) | copolymère acrylamide ADAME chlorométhylé | 8 millions | 4,73 | 0,7 % |
| Floculant anionique | EM 630 (émulsion) | copolymère acrylamide acrylate de sodium | 20 millions | NA | 0,3 % |
| Coagulant cationique | TS45SH (poudre) | homopolymère de DADMAC | 1 million | 6,2 | 1,5 % |

Pour les trois polymères testés, on prépare 20 dm³ d'une solution de polymère concentrée à 10g /dm³ dans un bac agité.

Dans une cuve de 200 dm³ agitée, on prépare 100 dm³ de boue et on y ajoute, sous agitation la quantité de chaux éteinte nécessaire afin d'obtenir un taux de traitement de 34%. Le dosage exprimé représente en % la quantité de réactif en équivalent sec (en Ca(OH₂) par rapport à la concentration en matière sèche de la boue. Pour les 2 premiers polymères (essais 1 et 2), la chaux est ajoutée à la boue sous la forme d'un lait de chaux concentré à 160 g/dm³. Après la dispersion de la chaux dans la boue, on ajoute la quantité prédéterminée de polymère en faisant référence aux concentrations illustrées au tableau 3 de chaque solution préparée de polymère. Pour le dernier polymère (essai n°3), la solution à 10 g/dm³ est incorporée au lait de chaux (concentré à 160 g/dm³ comme pour les essais 1 et 2), afin d'obtenir une composition (suspension) selon l'invention qui est ajoutée à la boue.

On commence ensuite le cycle de filtration. Celui-ci est considéré comme terminé quand le débit spécifique devient inférieur à 10 dm³/h/m² de surface filtrante. Le cycle de filtration est stoppé après 2 heures de filtration dans tous les cas si le débit spécifique minimum n'est pas atteint. Pour chacun des polymères testés, on note l'aptitude au débâtissage des gâteaux formés. On effectue également une mesure de siccité (% matière sèche) sur les gâteaux prélevés après 24 heures à l'étuve à 105°C.

Les résultats sont présentés au tableau 4 ci-dessous.

**Tableau 4**

| N° essai | 1 | 2 | 3 |
|---|---|---|---|
| Polymère organique | EM 840 MBL | EN 630 | |
| | | | Composition lait de chaux-TS 45SH |
| type | Floculant cationique | Floculant anionique | Coagulant cationique |
| Siccité du gâteau (% MS) | 27 % | 28 % | 31 % |
| Débâtissage | Gâteau collant | Gâteau collant | OK |

Comme on peut le constater, la composition coagulant cationique type poly-DADMAC/lait de chaux selon l'invention (essai 3) est la seule combinaison polymère/lait de chaux qui permette d'obtenir une siccité de gâteau de filtration optimisée ainsi que de bonnes propriétés de débâtissage.

### EXEMPLE 3

### Préparation d'une composition pulvérulente et stabilité à court terme

On reproduit les conditions opératoires de l'exemple 2, mais seul le coagulant cationique (TS45SH, type poly-DADMAC) est utilisé, à un dosage de 2% dans cet exemple (au lieu de 1,5% dans l'exemple 2).

Pour les 2 essais de cet exemple, on utilise comme composant minéral, une chaux vive fine (<90 µm), partiellement éteinte telle que divulguée dans le brevet EP 1 154 958, que l'on ajoute sous forme pulvérulente et à un dosage de 26% (de CaO p/r MS boue, soit le même dosage en équivalent Ca(OH)₂ que dans l'exemple 2).

Les variables suivantes de préparation et d'injection sont testées
▪ *Essai 1*: Mélange du coagulant sous forme sèche et de la chaux sous forme pulvérulente puis injection du mélange dans la cuve de maturation
▪ *Essai 2*: Mélange du coagulant sous forme sèche et de la chaux sous forme pulvérulente, stockage du mélange durant 48 heures puis injection du mélange dans la cuve de maturation

Les résultats de ces essais sont présentés au tableau 5 ci-dessous.

**Tableau 5**

| N° essai | 1 | 2 |
|---|---|---|
| Siccité du gâteau (% MS) | 35% | 36% |
| Débatissage | OK | OK |

Comme on peut le constater, les 2 essais permettent d'obtenir des siccités de gâteaux très élevées et un débâtissage aisé. L'essai 2 montre en outre que la composition pulvérulente prête à l'emploi est stable durant au moins 48h et conserve son efficacité pour le conditionnement.

### EXEMPLE 4

### Stabilité de la composition à long terme

La boue, analogue à celle de l'exemple 2, est conditionnée en laboratoire par une composition pulvérulente selon l'invention contenant un coagulant cationique organique (poly-DADMAC) et de la chaux, la composition étant soit fraichement formulée soit utilisée après une période de stockage de 2 mois suivant sa formulation.

La boue est traitée dans une cellule de filtration Faure qui simule une filtration industrielle sur filtre-presse. Le conditionnement est effectué en introduisant 2,5 dm³ de boue dans la cellule de filtration et la filtration se déroule pendant 2 heures, en observant une montée progressive de la pression jusqu'à 15 bars en 30 minutes puis un maintien de la pression pendant 1 heure à 15 bars. On mesure ensuite la matière sèche sur les gâteaux formés après 24 heures à l'étuve à 105°C.

La composition pulvérulente selon l'invention est préparée de la manière suivante. Dans un malaxeur asynchrone (type Hobart), on introduit 1 kg de chaux pulvérulente du type de l'exemple 3, puis 50 g de coagulant en poudre TS45SH. Le tout est mélangé durant 10 minutes. Les résultats des traitements sont présentés au tableau 6.

**Tableau 6**

| N° essai | 1 | 2 |
|---|---|---|
| Forme de la composition | Pulvérulente | Pulvérulente |
| Stockage de la composition selon l'invention | Non | 2 mois |
| Siccité du gâteau (% MS) | 33 % | 32 % |
| Débatissage | OK | OK |

Le tableau 6 montre que le réactif formulé même après 2 mois de stockage garde une très bonne efficacité.

### EXEMPLE 5

### Comparaison des performances de compositions selon l'invention par rapport à une association de FeCl3 et de chaux.

Trois types de boues
≈ une boue biologique
≈ une boue industrielle et
≈ une boue biologique digérée
   sont conditionnées en laboratoire au moyen
   - d'une part, de combinaisons optimisées de FeCl₃ et de chaux et,
   - d'autre part de compositions de poly-DADMAC et de chaux, selon l'invention

Les boues sont conditionnées puis filtrées dans une cellule de filtration Faure, selon le protocole opératoire décrit à l'exemple 4.

On calcule ensuite les quantités de boue produites. En effet, la limitation des coûts d'exploitation et d'élimination des boues incite à produire le moins de boue possible et à trouver le meilleur compromis entre la siccité finale et les quantités de réactifs de conditionnement à mettre en jeu.

Dans la boue déshydratée, on retrouve la matière sèche de produit à traiter, l'eau résiduelle et les agents de conditionnement.

Pour comparer les performances de différents conditionnements, outre la siccité, on cherchera à estimer la quantité de boues produites. On définit donc le rapport suivant:
Q= Quantité de boue déshydratée/quantité de matière sèche initialement présente dans la boue à traiter

Les résultats sont illustrés au tableau 7.

**Tableau 7**

| Type de boues | Boue biologique | | Boue industrielle | | Boue digérée | |
|---|---|---|---|---|---|---|
| N° essai | 1 | 2 | 3 | 4 | 5 | 6 |
| Conditionnement | FeCl₃ et lait de chaux | Composition poly-DADMAC et chaux | FeCl₃ et chaux pulvérulente | Composition poly-DADMAC et lait de chaux | FeCl₃ et chaux | Composition poly-DADMAC et chaux |
| Forme de la composition | | Suspension | | Pulvérulente | | Suspension |
| Dosage de coagulant (% en poids) | 8 | 1,5 | 8 | 1,5 | 5 | 1,0 |
| Dosage de chaux (% en poids) | 30 | 30 | 20 | 15 | 26 | 26 |
| Siccité obtenue (% MS) | 35 | 36 | 46 | 47 | 35 | 37 |
| Débatissage | OK | OK | OK | OK | OK | OK |
| Quantité de boue produite (Q) | 3,9 | 3,7 | 2,9 | 2,6 | 3,7 | 3,4 |

Comme on peut le constater, les compositions selon l'invention montrent dans tous les cas de meilleures performances (voir essais 2, 4 et 6 par rapport à la combinaison de FeCl₃ avec de la chaux-essais comparatifs: 1,3 et 5.

Les siccités des gâteaux sont systématiquement supérieures et la quantité de coagulant à mettre en oeuvre est très largement diminuée, de même, il est parfois possible également de diminuer la dose de chaux (que ce soit sous forme pulvérulente ou sous forme lait de chaux).

Les quantités de boue produite sont diminuées (diminution des doses de réactifs + augmentation de la siccité), ce qui procure un avantage d'exploitation important et diminue les couts d'élimination des boues.

### EXEMPLE 6

### Comparaison des performances de la composition selon l'invention par rapport à une composition contenant un floculant cationique

On soumet une boue digérée à trois types de conditionnement qui sont présentés au tableau 8 ci-dessous.

Cette boue est ensuite filtrée via une cellule de filtration Faure, selon un protocole opératoire identique à celui présenté à l'exemple 4.

La composition pulvérulente de poly-DADMAC et de chaux selon l'invention est préparée selon un protocole opératoire identique à celui présenté à l'exemple 4. Le mélange est stocké pendant une semaine avant son utilisation.

La composition selon l'invention de poly-DADMAC et de chaux sous forme liquide est obtenue de la manière suivante. Dans un bécher agité, on introduit 1 kg de lait de chaux concentré à 40% de matière sèche, puis on a ajouté 76,9 g de coagulant poly-DADMAC sous forme liquide et concentré à 20% de matière active. Le tout a été mélangé durant 10 minutes puis stocké durant une semaine. La suspension formulée a une concentration de 38,6% en chaux. Après 1 semaine, le mélange liquide a peu décanté et conserve son caractère pompable.

Les résultats sont présentés au tableau 8.

**Tableau 8**

| N° essai | 1 | 2 | 3 |
|---|---|---|---|
| conditionnement | Floculant cationique | Coagulant poly-DADMAC et chaux | Coagulant poly-DADMAC et chaux |
| Forme | Liquide | Pulvérulente | Liquide |
| Dosage de l'agent de conditionnement (% en poids) | 1 % | 20 % | 26 % |
| Siccité obtenue (% en poids MS) | 19 | 30 | 37 |
| Débatissage | Collant | OK | OK |
| Quantité de boue produite (Q) | 5,4 | 4,2 | 3,4 |

Comme on peut le constater, les essais réalisés avec les compositions selon l'invention (poly-DADMAC et chaux) permettent d'améliorer grandement les performances de déshydratation ainsi que le débâtissage du gâteau. Aussi bien le mélange pulvérulent que le mélange liquide montrent une bonne stabilité de formulation après une semaine. On ne note aucune altération des performances par rapport à un mélange fraichement réalisé. Par rapport à un conditionnement organique, le couple poly-DADMAC/chaux permet une réduction de la quantité de boues produites. Il y a autant de chaux et poly-DADMAC dans l'essai 2 que l'essai 3 car le dosage est exprimé en Ca(OH)₂ dans l'essai 3

### EXEMPLE 7

### Intérêt sur centrifugeuse

On soumet une boue biologique à deux types de conditionnement avant déshydratation sur centrifugeuse. Le premier conditionnement comprend une addition d'un floculant cationique et de chaux pulvérulente tandis que le second conditionnement comprend une addition d'un floculant cationique et d'une composition pulvérulente selon l'invention contenant du poly-DADMAC et de la chaux.

Pour chaque conditionnement la dose optimale de floculant est optimisée et la chaux pulvérulente utilisée est analogue à celle de l'exemple 3. La composition pulvérulente de poly-DADMAC et de chaux est un mélange pulvérulent préparé tel qu'indiqué à l'exemple 5.

On ajoute à la boue, soit la chaux (essai 1) soit la composition selon l'invention, contenant le poly-DADMAC et la chaux (essai 2) et on mélange avant l'ajout du floculant cationique. La boue floculée est déshydratée suivant une procédure simulant une déshydratation sur centrifugeuse. Les résultats sont présentés au tableau 9.

**Tableau 9**

| N° essai | 1 | 2 |
|---|---|---|
| Dosage de floculant (% en poids) | 0,55 | 0,08 |
| Réactif ajouté | Chaux | (poly-DADMAC et chaux) |
| Forme du réactif | pulvérulent | pulvérulent |
| Quantité de réactif (% en poids) | 30 | 30 |
| Siccité obtenue | 36 | 35 |

Comme on peut le constater, en association avec un floculant, le réactif formulé permet d'obtenir des performances de filtration similaires à un conditionnement floculant/chaux, mais la composition selon l'invention permet de diminuer de 85% la dose de floculant à mettre en oeuvre. La composition selon l'invention peut donc être mise en oeuvre en combinaison avec d'autres agents de conditionnements minéraux ou organiques.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Composition de conditionnement de boues comprenant un composé minéral et un composé organique, ledit composé minéral étant de la chaux, et ledit composé organique étant choisi dans le groupe des polymères linéaires ou ramifiés à base de sels de diallyldialkyl ammonium, **caractérisée en ce que** ledit composé organique choisi dans le groupe des polymères linéaires ou ramifiés à base de sels de diallyldialkyl ammonium est un coagulant organique, cationique, présentant un poids moléculaire moyen pondéral inférieur ou égal à 5 millions g/mol et supérieur ou égal à 20.000 g/mol, présent en une quantité allant de 3 g à 100 g pour 1 kg de chaux (exprimés en équivalent de chaux éteinte Ca(OH)₂), la composition étant sous la forme d'un mélange homogène et stable de chaux et dudit coagulant avant d'être introduite pour le conditionnement des boues, et **en ce que** ladite composition est
a) sous forme solide, dans laquelle ladite chaux est de la chaux éteinte et/ou de la chaux vive, toutes deux sous forme pulvérulente, et ledit coagulant organique cationique est également sous forme solide, ou
b) sous forme d'une suspension stable, dans laquelle ladite chaux est de la chaux éteinte sous forme de lait de chaux, et forme avec ledit coagulant organique ladite suspension.

2. Composition selon la revendication 1, dans laquelle ledit coagulant organique cationique présente une charge cationique supérieure ou égale à 4 meq/g et inférieure ou égale à 10 meq/g, de préférence supérieure ou égale à 4,5 meq/g et inférieure ou égale à 9 meq/g et de manière plus préférentielle supérieure ou égale à 5 meq/g et inférieure ou égale à 7,5 meq/g.

3. Composition selon la revendication 1 ou 2, dans laquelle ledit polymère à base de sels de diallyldialkyl ammonium est un polymère à base de composés de formule générale :
(CH2=CH-CH2)₂N⁺R₁R₂, X⁻
dans laquelle
X⁻ représente un halogénure ou un autre contre-ion de charge négative,
R₁ et R₂ représentent indépendamment l'un de l'autre un atome d'hydrogène ou une chaîne alkyle en C₁ à C₁₀.

4. Composition selon la revendication 3, dans laquelle ledit polymère est un polymère de chlorure de diallyl diméthyl ammonium.

5. Composition selon l'une quelconque des revendications 1 à 4, dans laquelle ledit polymère linéaire ou ramifié à base de sels de diallyldialkyl ammonium est un copolymère et comprend un ou plusieurs autres monomères choisi dans le groupe constitué des monomères non ioniques, tel que l'acrylamide, le méthacrylamide, la N-vinyl pyrrolidone, le vinylacétate, l'alcool vinylique, les esters acrylate, l'alcool allylique, le N- vinyl acétamide ou la N-vinylformamide, des monomères cationiques tels que le dialkylaminoalkyl (méth)acrylate, le dialkylaminoalkyl (méth)acrylamide, leurs sels d'ammonium quaternaire ou leurs sels d'acides, comme par exemple l'acrylate de diméthylaminoéthyle (ADAME), du méthacrylate de diméthylaminoéthyle (MADAME), quaternisés ou salifiés, du chlorure d'acrylamidopropylthriméthylammonium (APTAC) et du chlorure de méthacrylamidopropylthriméthylammonium (MAPTAC).

6. Composition selon l'une quelconque des revendications précédentes, dans laquelle ledit coagulant organique cationique comporte, en association aux charges cationiques, des charges anioniques portées par des monomères anioniques, tels que, par exemple, l'acide (méth)acrylique, l'acide acrylamidométhylpropane sulfonique, l'acide itaconique, l'anhydride maléique, l'acide maléique, l'acide vinyl-sulfonique, l'acide méthallyl sulfonique et leurs sels.

7. Composition selon l'une quelconque des revendications précédentes, dans laquelle ledit coagulant organique cationique est présent en une quantité allant de 5 à 80 g et plus préférentiellement de 10 à 65 g pour 1 kg de chaux (exprimés en équivalent de chaux éteinte Ca(OH)₂).

8. Utilisation de la composition selon l'une quelconque des revendications 1 à 7 pour le conditionnement de boues.

9. Utilisation de la composition selon l'une quelconque des revendications 1 à 8 pour le préchaulage des boues.

10. Procédé de déshydratation de boues, comprenant:
- une addition d'une composition selon l'une quelconque des revendications 1 à 7 à une boue, notamment urbaine ou industrielle à traiter avant déshydratation de cette dernière,
- un conditionnement de ladite boue à laquelle ladite composition a été ajoutée,
- une filtration de la boue ainsi conditionnée et une collecte du solide issu de ladite filtration.

11. Procédé selon la revendication 10, dans laquelle ladite filtration est réalisée au moyen d'un filtre à bandes, d'un filtre-presse ou d'un décanteur centrifuge et de préférence un filtre-presse.

12. Procédé selon l'une des revendications 10 ou 11, dans lequel la composition selon l'une quelconque des revendications 1 à 7 est ajoutée à un dosage correspondant à des taux de chaulage (exprimés en Ca(OH)₂) de 5 à 100%, en particulier de 10 à 80%, notamment de 15 à 60 % par rapport à la matière sèche de la boue.

## Patentansprüche

1. Zusammensetzung zur Konditionierung von Schlämmen, die eine mineralische Verbindung und eine organische Verbindung umfasst, wobei es sich bei der mineralischen Verbindung um Baukalk handelt, und wobei die organische Verbindung aus der Gruppe der geradkettigen oder verzweigten Polymere auf Basis von Diallyldialkylammoniumsalzen ausgewählt ist, **dadurch gekennzeichnet, dass** es sich bei der organischen Verbindung, welche aus der Gruppe der geradkettigen oder verzweigten Polymere auf Basis von Diallyldialkylammoniumsalzen ausgewählt ist, um ein kationisches organisches Koagulationsmittel handelt, dessen Gewichtsmittel des Molekulargewichts höchstens 5 Millionen g/mol und mindestens 20.000 g/mol beträgt, wobei es in einer Menge von 3 g bis 100 g pro 1 kg Baukalk (ausgedrückt in Löschkalk Ca(OH)₂-Äquivalenten) vorliegt, wobei die Zusammensetzung in Form einer homogenen und stabilen Mischung aus Baukalk und aus dem Koagulationsmittel vorliegt, bevor sie zur Konditionierung der Schlämme zugesetzt wird, und **dadurch gekennzeichnet, dass** die Zusammensetzung
a) in feststofflicher Form vorliegt, wobei es sich bei dem Baukalk um Löschkalk und/oder Branntkalk handelt, beide in Pulverform, und wobei das kationische organische Koagulationsmittel ebenfalls in feststofflicher Form vorliegt, oder
b) in Form einer stabilen Suspension vorliegt, wobei es sich bei dem Baukalk um Löschkalk in Form von Kalkmilch handelt, und dieser mit dem organischen Koagulationsmittel die Suspension bildet.

2. Zusammensetzung nach Anspruch 1, wobei das kationische organische Koagulationsmittel eine kationische Ladung von mindestens 4 meq/g und höchstens 10 meq/g aufweist, vorzugsweise von mindestens 4,5 meq/g und höchstens 9 meq/g und, mit noch stärkerem Vorzug, von mindestens 5 meq/g und höchstens 7,5 meq/g.

3. Zusammensetzung nach Anspruch 1 oder 2, wobei es sich bei dem Polymer auf Basis von Diallyldialkylammoniumsalzen um ein Polymer auf Basis von Verbindungen der folgenden allgemeinen Formel handelt:
(CH2=CH-CH2)₂N⁺R₁R₂, X⁻
wobei
X⁻ für ein Halogenid oder ein anderes Gegenion mit negativer Ladung steht,
R₁ und R₂, unabhängig voneinander, für ein Wasserstoffatom oder eine C₁-C₁₀-Alkylkette stehen.

4. Zusammensetzung nach Anspruch 3, wobei es sich bei dem Polymer um ein Diallyldimethylammoniumchlorid-Polymer handelt.

5. Zusammensetzung nach einem beliebigen der Ansprüche 1 bis 4, wobei es sich bei dem geradkettigen oder verzweigten Polymer auf Basis von Diallyldialkylammoniumsalzen um ein Copolymer handelt und es ein oder mehrere weitere Monomere umfasst, die aus der Gruppe ausgewählt sind, die aus nichtionischen Monomeren wie etwa Acrylamid, Methacrylamid, N-Vinylpyrrolidon, Vinylacetate, Vinylalkohol, Acrylatestern, Allylalkohol, N-Vinylacetamid oder N-Vinylformamid, aus kationischen Monomeren wie etwa Dialkylaminoalkyl(meth)acrylat, Dialkylaminoalkyl(meth)acrylamid, deren quartären Ammoniumsalzen oder deren Säuresalzen wie beispielsweise Dimethylaminoethylacrylat (ADAME), Dimethylaminoethylmethacrylat (MADAME), wobei diese in die quartäre Form überführt oder versalzt sein können, Acrylamidopropyltrimethylammoniumchlorid (APTAC) und Methacrylamidopropyltrimethylammoniumchlorid (MAPTAC) besteht.

6. Zusammensetzung nach einem beliebigen der vorhergehenden Ansprüche, wobei das kationische organische Koagulationsmittel, in Verbindung mit den kationischen Ladungen, anionische Ladungen aufweist, die von anionischen Monomeren getragen werden, wie beispielsweise von (Meth)acrylsäure, Acrylamidomethylpropansulfonsäure, Itaconsäure, Maleinsäureanhydrid, Maleinsäure, Vinylsulfonsäure, Methallylsulfonsäure und deren Salzen.

7. Zusammensetzung nach einem beliebigen der vorhergehenden Ansprüche, wobei das kationische organische Koagulationsmittel in einer Menge von 3 bis 100 g, vorzugsweise von 5 bis 80 g und, mit größerem Vorzug, von 10 bis 65 g pro 1 kg an Baukalk (ausgedrückt in Löschkalk Ca(OH)₂-Äquivalenten) vorliegt.

8. Verwendung der Zusammensetzung nach einem beliebigen der Ansprüche 1 bis 7 zur Konditionierung von Schlämmen.

9. Verwendung der Zusammensetzung nach einem beliebigen der Ansprüche 1 bis 8 zur Vorkalkung von Schlämmen.

10. Verfahren zur Entwässerung von Schlämmen, das Folgendes umfasst:
- einen Zusatz einer Zusammensetzung nach einem beliebigen der Ansprüche 1 bis 7 zu Schlämmen, insbesondere kommunaler oder industrieller Herkunft, die vor ihrer Entwässerung behandelt werden müssen,
- eine Konditionierung des Schlamms, welchem die Zusammensetzung zusetzt wurde,
- eine Filtration des auf diese Weise konditionierten Schlamms und ein Auffangen des Feststoffs, der bei dem Trennungsvorgang anfällt.

11. Verfahren nach Anspruch 10, wobei die Filtration mittels eines Bandfilters, einer Filterpresse oder einer Dekantierzentrifuge durchgeführt wird, wobei eine Filterpresse bevorzugt wird.

12. Verfahren nach einem der Ansprüche 10 oder 11, wobei die Zusammensetzung nach einem beliebigen der Ansprüche 1 bis 7 in einer Dosierung zugesetzt wird, die einem Kalkungsgrad (ausgedrückt in Ca(OH)₂) von 5 bis 100 %, besonders von 10 bis 80 %, insbesondere von 15 bis 60 % entspricht, bezogen auf die Trockenmasse des Schlamms.

## Claims

1. Composition for conditioning sludges comprising a mineral compound and an organic compound, said mineral compound being lime, and said organic compound being selected from the group consisting of linear or branched diallyl dialkyl ammonium salts, **characterized in that** said organic compound selected from the group consisting of linear or branched diallyl dialkyl ammonium salts is an organic, cationic coagulant, having an average molecular weight less than or equal to 5 million g/mol and greater or equal to 20.000 g/mol, present in a quantity ranging from 3 g to 100 g for 1 kg of lime (expressed as slaked lime Ca(OH)₂ equivalent), said composition being in the form of an homogenous and stable mixture of lime and said coagulant before being introduced for conditioning sludges, and **in that** said composition is
a) in solid form, wherein said lime is slaked lime and/or quicklime, both in powdery form, and said organic cationic coagulant is also in solid form, or
b) in a stable suspension form, wherein said lime is slaked lime in the form of a milk of lime, and forms with said organic coagulant the said suspension.

2. Composition according to claim 1, wherein said organic cationic coagulant has a cationic charge greater than or equal to 4 meq/g and less than or equal to 10 meq/g, preferably greater than or equal to 4,5 meq/g and less than or equal to 9 meq/g and most preferably greater than or equal to 5 meq/g and less than or equal to à 7,5 meq/g.

3. Composition according to claim 1 or 2, wherein the said polymer based on diallyldialkyl ammonium salt is a polymer based on compounds of general formula:
(CH2=CH-CH2)₂N⁺R₁R₂, X⁻
in which
X⁻ represents a halide or another negatively charged counter ion,
R₁ and R₂ represent independently of each other a hydrogen atom or a C₁ to C₁₀ alkyl chain.

4. Composition according to claim 3, wherein said polymer is a diallyl dimethyl ammonium chloride polymer.

5. Composition according to any one of claims 1 to 4, wherein said linear or branched polymer based on diallyldialkyl ammonium salt is a copolymer and comprises one or several other monomers selected from the group consisting of non-ionic monomers, including acrylamide, methacrylamide, N-vinyl pyrrolidone, vinyl acetate, vinyl alcohol, acrylate esters, allyl alcohol, N- vinyl acetamide or N-vinyl formamide, and cationic monomers including dialkylaminoalkyl (meth)acrylate, dialkylaminoalkyl (meth)acrylamide, quaternary ammonium salts thereof or acid salts thereof including for example dimethylaminoethyl acrylate (DMAEA), dimethylaminoethyl methacrylate (DMAEMA), quaternised or with the salt produced, acrylamidopropylthrimethylammonium chloride (APTAC) and methacrylamidopropylthrimethylammonium (MAPTAC).

6. Composition according to any one of the preceeding claims, wherein said organic cationic coagulant comprises, in association with the cationic charges, anionic charges carried by anionic monomers, including, for example, (meth)acrylic acid, acrylamidomethylpropane sulfonic acid, itaconic acid, maleic anhydride, maleic acid, vinyl sulfonic acid, methallyl sulfonic acid and salts thereof.

7. Composition according to any of the preceding claims, wherein said organic cationic coagulant is present in a quantity ranging from 5 to 80 g and more preferably from 10 to 65 g for 1 kg of lime (expressed as slaked lime Ca(OH)₂ equivalent).

8. Use of the composition according to any one of claims 1 to 7 for conditioning sludges.

9. Use of the composition according to any one of claims 1 to 8 for preliming sludges.

10. Method for dewatering sludges, comprising:
- addition of a composition according to any one of claims 1 to 7 to a sludge to be conditioned, notably a municipal or industrial sludge, before dewatering of the latter,
- conditioning of said sludge to which the said composition has been added,
- filtration of the sludge thus conditioned and collection of the solid issuing from the said filtration.

11. Method according to claim 10, wherein the said filtration is performed by means of a belt filter, a filter press or a centrifuge and preferably a filter press.

12. Method according to any one of claim 10 or 11, wherein the said composition according to any one of claims 1 to 7 is added to the sludge at a dosing which corresponds to liming rates (expressed as Ca(OH)₂) of from 5 to 100%, in particular from 10 to 80%, notably from 15 to 60 % with respect to the dry matter of the sludge.
